# EUROPÄISCHE PATENTSCHRIFT

(11) **EP 4 157 574 B1**
(45) Veröffentlichungstag und Bekanntmachung des Hinweises auf die Patenterteilung: **15.01.2025**
(21) Anmeldenummer: 21729509.6
(22) Anmeldetag: 28.05.2021
(51) Int. Cl.: B23K 7/00, B23K 7/10, B23K 9/013, B23K 9/32, B23K 10/00, B23K 15/02, B23K 15/08, B23K 26/08, B23K 26/38, B23K 31/00, B23K 37/02, B23K 37/04

(54) **VERFAHREN ZUR HERSTELLUNG VON WERKSTÜCKTEILEN AUS EINEM PLATTENFÖRMIGEN WERKSTÜCK SOWIE DATENVERARBEITUNGSPROGRAMM UND BEARBEITUNGSMASCHINE ZU DEREN HERSTELLUNG**
METHOD OF PRODUCING WORKPIECE PARTS FROM A PLATE-SHAPED WORKPIECE AND DATA PROCESSING PROGRAM AND PROCESSING MACHINE FOR PRODUCING THE SAME
PROCÉDÉ DE FABRICATION DE PARTIES DE PIÈCE À PARTIR D'UNE PIÈCE EN FORME DE PLAQUE, AINSI QUE PROGRAMME DE TRAITEMENT DES DONNÉES ET MACHINE D'USINAGE DESTINÉE À LEUR FABRICATION

(30) Priorität: 28.05.2020 EP 20177122
(43) Veröffentlichungstag der Anmeldung: 05.04.2023
(73) Patentinhaber: TRUMPF Werkzeugmaschinen SE + Co. KG, 71254 Ditzingen (DE)
(72) Erfinder: RAUSCHER, Steffen, 73265 Dettingen unter Teck (DE); RAICHLE, Florian, 71522 Backnang (DE); WOLF, Dennis, 71296 Heimsheim (DE); SCHOENHARDT, Guido, 71254 Ditzingen (DE); BUNZ, Andreas, 70771 Leinfelden-Echterdingen (DE)
(74) Vertreter: Trumpf Patentabteilung
(86) Internationale Anmeldenummer: PCT/EP2021/064355
(87) Internationale Veröffentlichungsnummer: WO 2021/239952

(56) Entgegenhaltungen:
- WO-A1-2015/091347
- JP-A- 2005 319 969
- JP-A- H10 146 671

## Beschreibung

Die Erfindung betrifft ein Verfahren zur Herstellung von Werkstückteilen aus einem plattenförmigen Werkstück in einer Bearbeitungsmaschine sowie ein Datenverarbeitungsprogramm für eine Maschinensteuerung einer Bearbeitungsmaschine als auch eine Bearbeitungsmaschine zum Herstellen von Werkstückteilen aus einem plattenförmigen Werkstück.

Aus der WO 2015/091347 A (offenbarend den Oberbegriff der Ansprüche 1, 7 und 8) ist eine Bearbeitungsmaschine, insbesondere Laserschneidmaschine, bekannt. Diese Bearbeitungsmaschine umfasst eine Werkstückauflage sowie mehrere Spannpratzen zum Greifen eines auf der Werkstückauflage positionierten plattenförmigen Werkstücks. Des Weiteren ist eine Strahlquelle zur Erzeugung eines Prozessstrahles vorgesehen. Der Prozessstrahl wird mittels eines Bearbeitungskopfes auf das plattenförmige Werkstück gerichtet, um Werkstückteile aus dem plattenförmigen Werkstück zu schneiden. Bevorzugt wird ein Laserstrahl zur Herstellung der Werkstückteile eingesetzt. Bei dieser Bearbeitungsmaschine ist vorgesehen, dass das plattenförmige Werkstück auf der Werkstückauflage entlang einer X-Achse verfahrbar ist und der Bearbeitungskopf oberhalb der Werkstückauflage entlang einer Y-Achse zur Werkstückauflage verfahrbar ist.

Aus der EP 2 008 736 A1 ist eine weitere Bearbeitungsmaschine zur Herstellung von Werkstückteilen zum Schneiden und/oder Stanzen aus dem plattenförmigen Werkstück bekannt. Bei dieser Bearbeitungsmaschine ist ein abweichendes Maschinenkonzept vorgesehen. Der Bearbeitungskopf zur Ausgabe des Prozessstrahles ist stillstehend und das plattenförmige Werkstück wird durch die Klemmeinrichtung in X- und/oder Y-Richtung entlang der Werkstückauflage bewegt.

Alternativ ist auch ein Maschinenkonzept bekannt, bei dem das plattenförmige Werkstück ruhend auf der Werkstückauflage gehalten ist und der Bearbeitungskopf relativ dazu entlang dazu in einer X- und Y-Achse oberhalb der Werkstückauflage verfahrbar ist.

Bei einer Abarbeitung des plattenförmigen Werkstücks zur Herstellung der Werkstückteile mit einem Prozessstrahl, insbesondere Laserstrahl, kann es aufgrund des Wärmeeintrags des Schneidprozesses zu Verspannungen im plattenförmigen Werkstück kommen. Dies kann zur Folge haben, dass das plattenförmige Werkstück sich wellt. Dies kann wiederum dazu führen, dass das zu schneidende Werkstückteil während des Schneidprozess schlagartig nach oben oder unten schnappt, sodass es zu einem sogenannten Schnittabriss kommt. Dies bedeutet, dass das Werkstückteil nicht vollständig vom plattenförmigen Werkstück beziehungsweise dem Restgitter getrennt wird und nicht mehr vom plattenförmigen Werkstück entnommen werden kann. Auch ohne einen solchen Schnittabriss kann es durch Verspannungen des plattenförmigen Werkstückes dazu kommen, dass das geschnittene Werkstückteil nicht aus dem plattenförmigen Werkstück entnehmbar ist.

Aus der DE 10 2015 217 015 B1 ist eine Laserschneidvorrichtung zur Herstellung einer Blechplatine mittels eines Laserstrahls bekannt. Der Laserschneidvorrichtung wird ein Blech von einem Coil zugeführt, wobei dieses Blech mittels einer Reckeinrichtung spannungsfrei verzogen wird. Darauffolgend wird dieses gereckte Blech, bei dem eine Zugspannung aufgebracht wird, so dass die Streckgrenze eines das Blech bildenden Metalls überschritten ist, der Laserschneidvorrichtung zugeführt, um die Blechplatine zu schneiden. Somit wird ein gerecktes Blech dem Schneidprozess zugeführt. Während dem Schneidprozess wird das Blech mit höchstens einer der Klemmeinrichtungen gehalten oder beim Schneiden des Bleches sogar die klemmende Verbindung der Klemmeinrichtungen gelöst.

Aus der JP 2005 319 969 A ist eine Vorrichtung zur Unterstützung des Schweißens eines Fahrgestellrahmens mit einem Satz Seitenschienen und einer Vielzahl von Querträgern, die zwischen den Seitenschienen angeordnet sind, bekannt. Vorgesehen sind, eine Vielzahl von Seitenschienenklemmen, die entsprechend den Positionen der Seitenschienen im Fahrgestellrahmen und der Form der Seitenschienen vorgesehen sind und von denen jede den Satz Seitenschienen halten kann, und mehrere Querträgerklemmen, die entsprechend den Positionen der mehreren Querträger im Fahrgestellrahmen und den Formen der mehreren Querträger vorgesehen sind und die jeweils die mehreren Querträger halten können. In der Nähe beider Enden in Längsrichtung des Seitengitters sind Pressmittel vorgesehen, die in der Lage sind, die Querträger in der Nähe beider Enden des Seitengitters und/oder in der Nähe der Enden in die vorgegebene Richtung zu drücken.

Für die maßhaltige Herstellung von Werkstückteilen aus plattenförmigen Werkstücken ist jedoch erforderlich, dass eine Klemmung des plattenförmigen Werkstücks gegeben ist, so dass ein Verdrehen des plattenförmigen Werkstücks in der Auflageebene auf einer Werkstückauflage der Bearbeitungsmaschine verhindert ist.

Der Erfindung liegt die Aufgabe zugrunde, ein Verfahren zur Herstellung von Werkstückteilen aus einem plattenförmigen Werkstück sowie ein Datenverarbeitungsprogramm und eine Bearbeitungsmaschine vorzuschlagen, um die durch Wärmeeintrag in das plattenförmige Werkstück erzeugten Verspannungen abzubauen.

Diese Aufgabe wird durch ein Verfahren zum Herstellen von Werkstückteilen aus einem plattenförmigen Werkstück entsprechend Anspruch 1 gelöst, bei dem ein Schneidprozess zum Abarbeiten des plattenförmigen Werkstücks für die Herstellung der Werkstückteile zumindest einmal durch einen Entspannungsschritt unterbrochen wird und bei dem während des Entspannungsschrittes zumindest eine Klemmeinrichtung zum Entspannen des plattenförmigen Werkstücks gelöst wird und nach dem Entspannen des plattenförmigen Werkstücks und vor der Fortführung des Schneidprozesses die zumindest eine gelöste Klemmeinrichtung wieder geschlossen wird. Dieses Verfahren ermöglicht, dass die Produktivität der Bearbeitungsmaschine nur in einem geringen Maße reduziert wird, und zwar durch die kurzzeitige Unterbrechung des Schneidprozesses zur Durchführung des zumindest einen Entspannungsschrittes. Dadurch wird jedoch ermöglicht, dass ein Verspannen des plattenförmigen Werkstücks durch den Wärmeeintrag des Schneidstrahls, insbesondere eines Laserstrahls, der sich vor allem negativ auf die Schnittgenauigkeit und/oder Prozesssicherheit auswirkt, reduziert oder eliminiert werden kann. Dadurch kann auch eine hohe Maßgenauigkeit bei der Herstellung der Werkstückteile erzielt werden. Zudem wurde festgestellt, dass beim Schneiden von Werkstückteilen, insbesondere größeren Werkstückteilen, ein Schnittabriss vermieden werden kann.

Die durch einen Entspannungsschritt entstehende Unterbrechung des Schneidprozesses soll so gering wie möglich gehalten werden. Die Zeit eines Entspannungsschrittes hängt dabei maßgeblich von der Zeit ab, die zum Lösen und Schließen einer Klemmeinrichtung benötigt wird. Bei der Verwendung von pneumatischen oder hydraulischen Klemmeinrichtungen ist die minimale Zeit eines Entspannungsschrittes beispielsweise durch die für die jeweilige Entlastung und nachfolgende Beaufschlagung der Klemmeinrichtungen mit einem bestimmten Klemmdruck erforderliche Zeit limitiert. Die Zeit zum Lösen bzw. Öffnen (z.B. Unterschreiten einer unteren Klemmdruckschwelle) und nachfolgenden vollständigen Schließen (z.B. erreichen eines erforderlichen Klemmdrucks) zumindest einer Klemmeinrichtung beträgt bei dem erfindungsgemäßen Verfahren weniger als 5 Sekunden, vorzugsweise weniger als 3 Sekunden.

Dabei ist es vorgesehen, dass die Anzahl der Entspannungsschritte während des Schneidprozesses zum Abarbeiten des plattenförmigen Werkstücks in Abhängigkeit von der Zahl der aus dem plattenförmigen Werkstück herzustellenden Werkstückteile, der Materialstärke des plattenförmigen Werkstücks, der Größe der Werkstückteile und/oder der Laserleistung für den Prozessstrahl angesteuert wird. Dadurch kann eine Optimierung für die Produktivität der Bearbeitungsmaschine unter Berücksichtigung dieser Parameter erfolgen.

In der Praxis kann die Anzahl der Entspannungsschritte beim Ausschneiden von Werkstückteilen aus einem plattenförmigen Werkstück, sowie der Zeitpunkt jedes Entspannungsschritts während des Bearbeitungsprozesses beispielsweise anhand einer visuellen Beurteilung durch einen Maschinenbediener bestimmt werden. Durch wärmeinduzierte Verspannungen kann sich das Werkstück verformen. Sobald der Bediener eine kritische Verformung (z.B. eine kritische Wölbung) des plattenförmigen Werkstücks wahrnimmt, kann er bestimmen, dass zeitnah, zum Beispiel vor der Durchführung des nächsten Schnittes, ein Entspannungsschritt durchgeführt wird. Auf diese Weise ergibt sich eine bestimmte Anzahl an Entspannungsschritten bei der Abarbeitung des gesamten plattenförmigen Werkstücks. Anzahl und Zeitpunkte der Entspannungsschritte können dann gespeichert und für nachfolgende gleichartige Bearbeitungsprozesse vorprogrammiert werden, sodass der Bediener nicht mehr in den Prozess eingreifen muss.

Alternativ kann der Bearbeitungsprozess auch durch eine entsprechende Sensorik überwacht werden, die Verformungen des Werkstücks beim Ausschneiden der Werkstückteile detektiert. Übersteigt die Verformung einen vorbestimmten, kritischen Wert (z.B. Wölbung des Werkstücks um einen bestimmten Betrag), so wird automatisch zum nächstmöglichen oder zu einem anderen geeigneten Zeitpunkt ein Entspannungsschritt durchgeführt.

Durch eine kritische Wölbung des Werkstücks kann der Abstand zwischen Werkstück und Schneidkopf lokal derart verändert werden, dass der Laserstrahl das Werkstück in diesem Bereich nicht mehr vollständig durchtrennt und es zum Schnittabriss kommt. Auch kann es zu einer Kollision zwischen gewölbtem Werkstück und Schneidkopf kommen.

Vorteilhafterweise wird der Schneidprozess nach einem vollständigen Schneiden eines Werkstückteils und vor dem Beginn des nächsten Schneidschrittes zum Schneiden des nachfolgenden Werkstückteils unterbrochen. Der Entspannungsschritt wird also zwischen zwei aufeinanderfolgenden Schneidschritten durchgeführt. Dadurch kann wiederum eine hohe Maßhaltigkeit der geschnittenen Werkstückteile erzielt werden.

Bei der Durchführung des Entspannungsschrittes ist es vorgesehen, dass das plattenförmige Werkstück, welches entlang einer Seitenkante durch mehrere Klemmeinrichtungen gehalten wird, zum Entspannen eines Teilbereichs des plattenförmigen Werkstücks die Klemmeinrichtungen von außen nach innen nacheinander gelöst werden, wobei zumindest zwei von den mehreren Klemmeinrichtungen geschlossen bleiben, die das plattenförmige Werkstück fixiert halten und darauffolgend nach dem Entspannen des Teilbereichs des plattenförmigen Werkstücks die Klemmeinrichtung von innen nach außen wieder geschlossen werden. Darauffolgend wird dieser Vorgang beginnend von der gegenüberliegenden Seite des plattenförmigen Werkstücks zum Entspannen des weiteren Teilbereichs des plattenförmigen Werkstücks wiederholt. Somit wird von jeder Stirnseite des plattenförmigen Werkstücks aus ein Entspannen ermöglicht. Gleichzeitig wird das plattenförmige Werkstück während des Entspannungsschrittes immer mit mindestens zwei Klemmeinrichtungen gehalten. Dies führt zu einer hohen Maßhaltigkeit, da sich dadurch das plattenförmige Werkstück weder verschieben noch relativ zu den Klemmeinrichtungen verdrehen kann.

Sofern das plattenförmige Werkstück durch drei Klemmeinrichtungen entlang einer Seitenkante gehalten wird, wird zum Entspannen des plattenförmigen Werkstücks die eine äußere Klemmeinrichtung geöffnet und geschlossen, sowie darauffolgend die gegenüberliegende äußere Klemmeinrichtung geöffnet und geschlossen. Somit bleibt die mittlere Klemmeinrichtung dauerhaft in einer Klemmposition, wobei abwechselnd zusätzlich jeweils eine der beiden äußeren Klemmeinrichtungen ebenso das Werkstück fixiert halten.

Sofern das plattenförmige Werkstück entlang einer Seitenkante durch vier oder mehrere Klemmeinrichtungen gehalten wird, wird zum Entspannen des plattenförmigen Werkstücks zunächst an einer Hälfte des plattenförmigen Werkstücks die äußere Klemmeinrichtung und darauffolgend zumindest eine benachbart dazu innenliegende Klemmeinrichtung geöffnet und nachfolgend in umgekehrter Weise wieder geschlossen, während die beiden weiteren Klemmeinrichtungen oder die Klemmeinrichtungen an der anderen Hälfte des plattenförmigen Werkstücks geschlossen bleiben. Anschließend wird dieser Vorgang an der gegenüberliegenden Hälfte des Werkstücks wiederholt. Dadurch wird das Öffnen der Klemmeinrichtungen von außen nach innen und das Schließen der Klemmeinrichtungen von innen nach außen angesteuert. Eine optimale Entspannung wird erzielt.

Beispielsweise können die äußeren Klemmeinrichtungen jeweils für etwa 2,5 Sekunden geöffnet werden. Während die jeweilige äußere Klemmeinrichtung geöffnet ist, kann die jeweils innenliegende Klemmeinrichtung für etwa 1 Sekunde geöffnet werden. Vom Beginn des Öffnens der ersten Klemmeinrichtung bis zur vollständigen Schließung (z.B. Erreichen eines vorgegebenen Klemmdrucks) der zweiten äußeren Klemmeinrichtung kann ein solcher Entspannungsvorgang mit vier Klemmeinrichtungen etwa 6 Sekunden in Anspruch nehmen.

Die Anzahl der Entspannungsschritte kann in Abhängigkeit der Materialstärke angesteuert werden. Vorteilhafterweise ist die Anzahl der Entspannungsschritte beim Abarbeiten des plattenförmigen Werkstückes von 4 mm oder weniger größer als bei einer Materialstärke des plattenförmigen Materials, welches größer als 4 mm ist. Bei einer größeren Materialstärke des plattenförmigen Materials kommt es bei einem Wärmeeintrag zu einer geringeren Verformung. Dadurch kann die Anzahl der Entspannungsschritte reduziert werden.

Des Weiteren ist bevorzugt vorgesehen, dass bei Werkstückteilen, die eine Kantenlänge von größer als 500 mm aufweisen und/oder eine längliche Form aufweisen, bei der das Verhältnis der Kantenlänge des umschließenden Recktecks zueinander größer als 2:1 ist, vor dem Schneidschritt zur Herstellung des Werkstückteils ein Entspannungsschritt durchgeführt wird. Alternativ oder zusätzlich kann auch nach dem Schneidschritt zur Herstellung des Werkstückteils ein Entspannungsschritt durchgeführt werden. Vor dem Schneiden eines länglichen Werkstücks ist es vorteilhaft, Verspannungen im Werkstück abzubauen, da sich eine Verformung des Werkstücks beim Schneiden länglicher Werkstückteile besonders negativ auswirkt. Durch die verlängerte Bearbeitungsdauer zur Herstellung solcher länglicher Werkstückteile erfolgt außerdem ein verstärkter Wärmeeintrag, der zu Verspannungen führen kann, die es durch einen Entspannungsschritt abzubauen gilt.

Eine weitere vorteilhafterweise Ausführungsform des Verfahrens sieht vor, dass die herzustellenden Werkstückteile aus dem plattenförmigen Werkstück in Reihen und Spalten geschachtelt werden und dass bei dem Schneidprozess von Werkstückteilen, die eine benachbarte Reihe zu den Klemmeinrichtungen bilden, zumindest ein Entspannungsschritt nach dem Fertigschneiden von wenigstens zwei Werkstückteilen angesteuert wird.

Eine weitere bevorzugte Ausgestaltung des Verfahrens sieht vor, dass bei einer Fixierung des plattenförmigen Werkstücks durch die Klemmeinrichtung entlang einer Seitenkante der Schneidprozess von Werkstückteilen, die in einer von den Klemmeinrichtungen abgewandten Hälfte, vorzugsweise einem abgewandten Drittel des plattenförmigen Werkstücks, liegen, ohne einen Entspannungsschritt durchgeführt wird. Es hat sich herausgestellt, dass in diesen Bereichen entfernt zu den Klemmeinrichtungen eine hohe Schnittgenauigkeit und Prozesssicherheit auch ohne Entspannungsschritte ermöglicht wird, wohingegen bei Werkstücken, näher an den Klemmeinrichtungen liegen, ein oder mehrere Entspannungsschritte erforderlich sind.

Die der Erfindung zugrundeliegende Aufgabe wird des Weiteren durch ein Datenverarbeitungsprogramm für eine Maschinensteuerung einer Bearbeitungsmaschine entsprechend Anspruch 7 gelöst, welche die Maschine zur Durchführung des Verfahrens nach einer der vorbeschriebenen Ausführungsformen ansteuert. Dadurch kann die Abarbeitung des plattenförmigen Werkstücks zur Herstellung von mehreren Werkstückteilen selbständig von der Bearbeitungsmaschine durchgeführt werden. Ergänzend oder alternativ kann auch nach dem Schneiden der im Datenverarbeitungsprogramm festgelegten Zahl der Werkstückteile eine Aufforderung an den Bediener erfolgt, den Entspannungsschritt durchzuführen. Der Bediener kann dabei entscheiden, ob der Entspannungsschritt durchgeführt werden soll oder zu diesem Zeitpunkt noch nicht notwendig ist. Es kann auch ergänzend ein Prozessschritt im Datenverarbeitungsprogramm vorgesehen sein, dass der Bediener in der Maschinensteuerung die Anzahl der Werkstückteile einstellen kann, nach welchen ein Entspannungsschritt durchgeführt wird, insbesondere, wenn es sich beim Schneiden um sehr komplexe Werkstückteile handelt, bei denen die durch das Datenverarbeitungsprogramm vorgesehene Zahl der Entspannungsschritte nicht ausreichend erscheint.

Die der Erfindung zugrundeliegende Aufgabe wird des Weiteren durch eine Bearbeitungsmaschine zur Herstellung von Werkstückteilen aus einem plattenförmigen Material, insbesondere einer Laserschneidmaschine, entsprechend Anspruch 8 gelöst wobei die Bearbeitungsmaschine eine Maschinensteuerung mit einem Datenverarbeitungsprogramm gemäß vorstehender Beschreibung aufweist, und bei dem die Werkstückteile aus dem plattenförmigen Werkstück gemäß einem der vorbeschriebenen Verfahrensschritte herstellbar sind.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer Bearbeitungsmaschine zur Herstellung von Werkstückteilen aus einem plattenförmigen Werkstück,
- Figur 2: eine schematische Ansicht auf ein plattenförmiges Werkstück mit Klemmeinrichtungen zur Darlegung eines Entspannungsschrittes,
- Figur 3: eine schematische Ansicht auf das plattenförmige Werkstück mit einer alternativen Anzahl von Klemmeinrichtungen zur Darstellung eines Entspannungsschrittes, und
- Figur 4: eine Darstellung einer beispielhaften zeitlichen Abfolge eines Entspannungsschrittes gemäß der in Figur 3 dargestellten Variante.

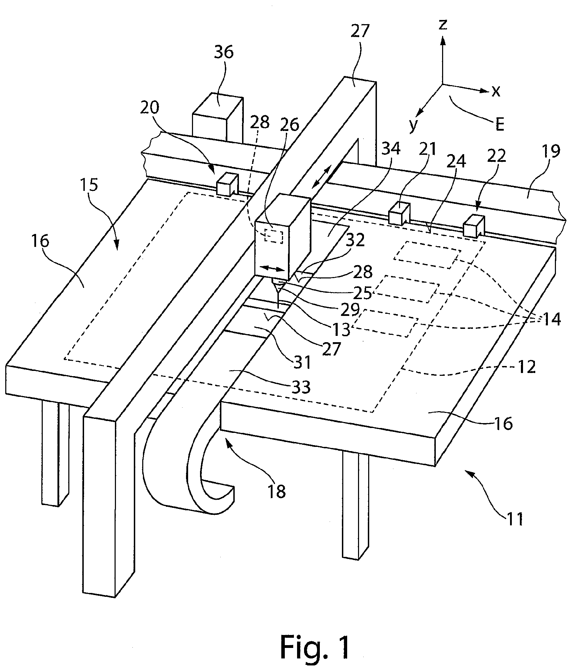

In Figur 1 ist beispielhaft eine Bearbeitungsmaschine 11 zur Herstellung von Werkstückteilen 14 aus einem plattenförmigen Werkstück 12 dargestellt. Die Herstellung der Werkstückteile 14 aus dem plattenförmigen Werkstück 12 erfolgt durch eine trennende Bearbeitung, insbesondere mittels eines Prozessstrahles 13. Die Bearbeitungsmaschine kann als eine Laserbearbeitungsmaschine zum Laserschneiden von Werkstückteilen 14 mit einem Laserstrahl als Prozessstrahl 13 ausgebildet sein. Zur schneidenden Bearbeitung der Werkstückteile 14 kann der Prozessstrahl 13 auch ein Plasmastrahl sein.

Das plattenförmige Werkstück 12 liegt bei der Bearbeitung auf einer Werkstückauflage 15 auf, welche beispielsweise aus zwei benachbart zueinander angeordneten Werkstückauflageflächen 16 gebildet ist, die unter Bildung eines Spaltes 18 beabstandet sind. Die Werkstückauflage 15 umfasst eine Auflageebene E, welche einer XY-Ebene des in Figur 1 dargestellten XYZ-Koordinatensystems entspricht.

Mittels einer Handhabungseinrichtung 19, welche einen nicht näher dargestellten Antrieb umfasst, werden mehrere Klemmeinrichtungen 20, 21, 22, 23 angesteuert. Durch die Klemmeinrichtungen 20, 21, 22, 23 kann das plattenförmige Werkstück 12 auf der Werkstückauflage 15 in einer Bewegungsrichtung X verschoben und an eine vorgegebene Bearbeitungsposition bewegt werden. Die Klemmeinrichtungen 20, 21, 22, 23 sind bevorzugt als Spannpratzen, oder Klemmpratzen ausgebildet, die entlang einer Seitenkante 24 des plattenförmigen Werkstücks 12 angreifen. Alternativ kann auch vorgesehen sein, dass zur Bewegung oder Unterstützung der Bewegung des plattenförmigen Werkstücks 12 in X-Richtung die Werkstückaufnahme 15 selbst als Bewegungseinrichtung ausgestaltet ist, beispielsweise in Form eines oder mehrerer umlaufender Förderbänder, wie dies in der DE 10 2011 051 170 A1 der Anmelderin beschrieben ist.

Der zwischen den Werkstückauflageflächen 16 der Werkstückauflage 15 liegende Spalt 18 erstreckt sich in Y-Richtung vorzugsweise über den gesamten Verfahrweg eines Bearbeitungskopfes 25, der den Prozessstrahl 30 auf das plattenförmige Werkstück 12 ausrichtet und fokussiert. Der Bearbeitungskopf 25 ist mittels eines als Bewegungseinrichtung dienenden angetriebenen Schlittens 26 an einem feststehenden Portal 27 geführt. Der Bearbeitungskopf 25 ist oberhalb des Spaltes 18 in Y-Richtung verfahrbar angesteuert. Der Bearbeitungskopf 25 kann im dargestellten Beispiel innerhalb des Spaltes 18 zusätzlich auch in X-Richtung gesteuert verfahrbar sein. Hierzu kann der Schlitten 26 mit einer zusätzlichen Bewegungseinrichtung 28, beispielsweise in Form eines Linearantriebs, in X-Richtung gesteuert verfahren werden. Mit Hilfe der aufeinander aufbauenden Bewegungseinrichtungen 26, 28 kann der Bearbeitungskopf 25 sowohl in X-Richtung als auch in Y-Richtung in einer gewünschten Schneidposition innerhalb des Spaltes 18 positioniert werden. Gegebenenfalls kann der Bearbeitungskopf 25 auch entlang einer dritten Bewegungsrichtung (Z-Richtung) verschoben werden, um den Abstand zwischen einer Bearbeitungsdüse 29 des Bearbeitungskopfes 25 und der Werkstückoberfläche einzustellen.

Innerhalb des Spaltes 18 sind zwei Unterstützungsschlitten 31, 32 angeordnet, die sich jeweils über die Breite des Spaltes 18 erstrecken und im Spalt in Y-Richtung gesteuert sowie unabhängig voneinander verfahrbar sind. Am jeweiligen zum Prozessstrahl 13 entfernten Ende der Unterstützungsschlitten 31, 32 ist jeweils ein Überdeckungselement 33, 34 vorgesehen, durch welches der Spalt 18 geschlossen ist. Der Prozessstrahl 13 wird durch eine Strahlquelle 36, insbesondere einer Laserquelle, erzeugt und mittels einer nicht näher dargestellten Strahlführung dem Bearbeitungskopf 25 zugeführt und über diesen ausgegeben.

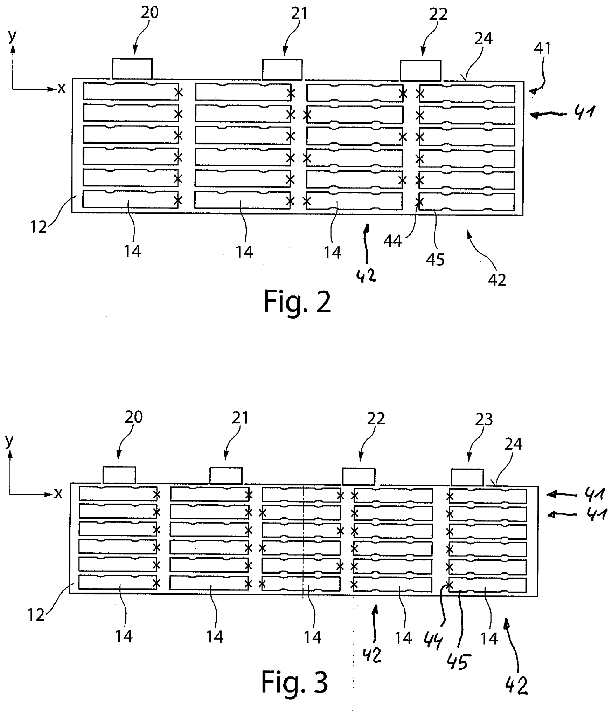

Bei der Abarbeitung des durch die Klemmeinrichtung 20, 21, 22, 23 gehaltenen plattenförmigen Werkstücks 12, das auf der Werkstückauflage 15 aufliegt, wird zur Vermeidung von im plattenförmigen Werkstück 12 auftretenden Verspannungen beispielsweise folgende Bearbeitungen durchgeführt:
Eine erste Ausführungsform des Verfahrens zur Herstellung von Werkstückteilen 14 aus dem plattenförmigen Werkstück 12 durch trennende Bearbeitung wird anhand der Figur 2 näher beschrieben.

Das plattenförmige Werkstück 12 weist eine länglich rechteckige Geometrie auf. Entlang einer Seitenkante 24, insbesondere der längeren Seitenkante des plattenförmigen Werkstücks 12, ist das plattenförmige Werkstück 12 beispielsweise durch drei Klemmeinrichtungen 20, 21, 22 gehalten. Das Angreifen von drei Klemmeinrichtungen 20, 21, 22 erfolgt bei kleineren plattenförmigen Werkstücken 12, beispielsweise bis zu einer Länge der Seitenkante 24 von 2.400 mm. Die Werkstückteile 14 sind beispielsweise in sechs Reihen 41 und vier Spalten 42 geschachtelt. Die Werkstückteile 14 werden ausgehend von einem Startpunkt 44 im Uhrzeigersinn oder im Gegenuhrzeigersinn geschnitten und ein Schneidspalt 45 mit dem Prozessstrahl 13 eingebracht, bis der Prozessstrahl 13 wieder bis zum Startpunkt 44 gelangt. Im Startpunkt 44 kann ein Mikrojoint ausgebildet sein, der das Werkstückteil 14 mit dem plattenförmigen Werkstück 12 verbindet. Auch kann eine vollständige Trennung des Werkstücks 14 vom plattenförmigen Werkstück 12 erfolgen.

Bei einem Schneidprozess zur Abarbeitung des plattenförmigen Werkstücks 12 werden ein oder mehrere Werkstückteile 14 mit dem Prozessstrahl 13 geschnitten. Zum Abbau der durch den Wärmeeintrag in das plattenförmige Werkstück 12 erzeugten Verspannungen wird zumindest einmal während dem Schneidprozess zur Abarbeitung des Werkstücks zwischen zwei Schneidschritten zum Schneiden von Werkstückteilen ein Entspannungsschritt durchgeführt. Der Ablauf eines solchen Entspannungsschrittes wird nachfolgend beschrieben.

Beispielsweise kann zunächst die erste, bzw. äußere Klemmeinrichtung 20 geöffnet werden, damit sich der der Klemmeinrichtung 20 zugeordnete Teilbereich des plattenförmigen Werkstücks 12 entspannen kann. Die beiden weiteren Klemmeinrichtungen 21, 22 bleiben zur Aufrechterhaltung der Lage und Orientierung des plattenförmigen Werkstücks 12 geschlossen. Nach dem Entspannen des einen Teilbereichs des plattenförmigen Werkstücks 12, der der ersten Klemmeinrichtung 20 zugeordnet ist, wird diese Klemmeinrichtung 20 geschlossen. Darauffolgend wird die der gegenüberliegenden Seite des plattenförmigen Werkstücks 12 vorgesehene dritte, bzw. äußere Klemmeinrichtung 22 geöffnet. Nach dem Entspannen des der dritten Klemmeinrichtung 22 zugeordneten Teilbereiches des plattenförmigen Werkstücks 12 wird die Klemmeinrichtung 22 wieder geschlossen. Der Entspannungsschritt bei beispielsweise drei Klemmeinrichtungen 20, 21, 22 für das plattenförmige Werkstück 12 ist danach abgeschlossen. Bei diesem Entspannungsschritt bleibt die mittlere Klemmeinrichtung 21 dauerhaft geschlossen.

Ein solcher Entspannungsschritt kann beispielsweise dann durchgeführt werden, wenn ein oder mehrere Werkstückteile 14 in der ersten und/ oder in der zweiten und/oder in der dritten Reihe 41 abgearbeitet sind. Auch kann ein Entspannungsschritt dann erfolgen, wenn die Werkstückteile 14 nach Spalten 42 hergestellt werden. Bei der Herstellung von Werkstückteilen 14 entlang einer Spalte 42 wird mit zunehmender Nähe der Werkstückteile 14 zur Klemmeinrichtung 20, 21, 22 zunehmend die Anzahl der Entspannungsschritte erhöht.

In Figur 3 ist eine schematische Ansicht auf ein plattenförmiges Werkstück 12 dargestellt, welches eine Länge der Seitenkante 24 von beispielsweise größer 2.400 mm aufweist. In diesem Fall greifen wenigstens vier Klemmeinrichtungen 20, 21, 22, 23 an der Seitenkante 24 an. Bei einer solchen Größe des plattenförmigen Werkstücks 12 erfolgt der Entspannungsschritt beispielsweise wie folgt:
Die Klemmeinrichtungen 20, 21, 22, 23 spannen das plattenförmige Werkstück 12 während der Herstellung des zumindest einen Werkstückteils 14. Nach dem vollständigen Schneiden des einen Werkstückteils 14 wird der Entspannungsschritt eingeleitet, bevor das zumindest eine nächste Werkstückteil 14 geschnitten wird. Zunächst wird eine äußerste Klemmeinrichtung, beispielsweise die Klemmeinrichtung 23, geöffnet. Darauffolgend wird die benachbarte innenliegende Klemmeinrichtung 22 geöffnet. Dadurch kann der die Klemmeinrichtungen 22, 23 zugeordnete Teilbereich des plattenförmigen Werkstücks 12 entspannt werden. Anschließend werden die geöffneten Klemmeinrichtungen 22, 23 von innen nach außen geschlossen, also zunächst die innenliegende Klemmeinrichtung 22 und darauffolgend die äußere Klemmeinrichtung 23. Dadurch ist beispielsweise eine rechte Hälfte des plattenförmigen Werkstücks 12 entspannt. Die Klemmeinrichtungen 20, 21 bleiben während der ersten Phase des vorbeschriebenen Entspannungsschrittes geschlossen.

Darauffolgend wird dieselbe Abfolge für die linke Hälfte des plattenförmigen Werkstücks 12 durchgeführt, d.h., es wird zunächst die Klemmeinrichtung 20 geöffnet und danach die Klemmeinrichtung 21, während die Klemmeinrichtungen 22 und 23 geschlossen bleiben. Anschließend wird Klemmeinrichtung 21 und schließlich Klemmeinrichtung 20 wieder geschlossen. Danach ist eine zweite Phase des Entspannungsschrittes und somit der gesamte Entspannungsschritt abgeschlossen.

Eine analoge Vorgehensweise zur Durchführung des Entspannungsschrittes ist auch dann gegeben, wenn beispielsweise fünf, sechs oder mehr Klemmeinrichtungen an einer Seitenkante 24 des plattenförmigen Werkstücks 12 angreifen. Das aufeinanderfolgende Öffnen der Klemmeinrichtungen vom äußeren Rand zur Mitte hin erfolgt in dem Umfang, dass zumindest zwei Klemmeinrichtungen während des Entspannungsschrittes immer geschlossen gehalten sind.

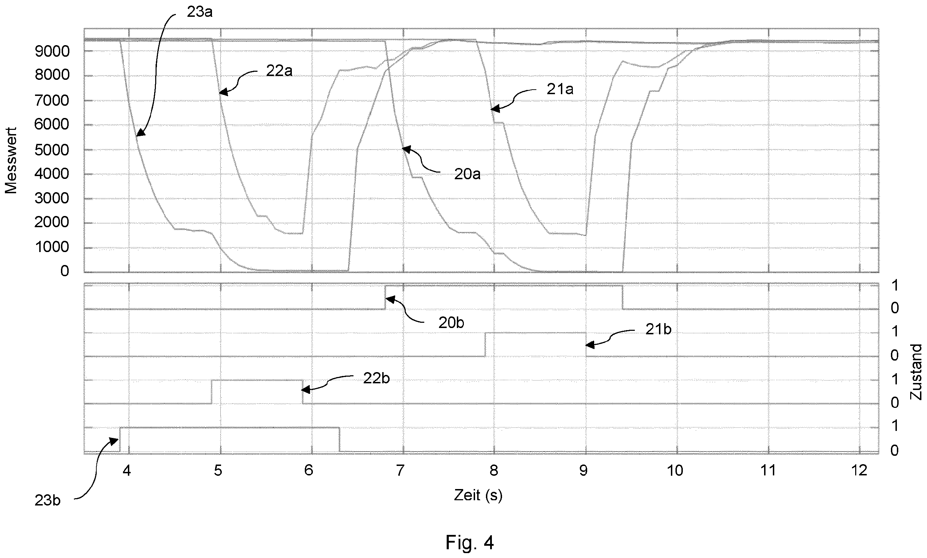

Figur 4 zeigt die zeitliche Abfolge des Öffnens (bzw. Lösens) und des Schließens der Klemmeinrichtungen 20, 21, 22, 23 während eines Entspannungsschritts gemäß der im Zusammenhang mit Figur 3 beschriebenen Variante. In der oberen Hälfte der Darstellung ist für jede Klemmeinrichtung 20, 21, 22, 23 der Klemmdruckverlauf (in hPa) über die Dauer des Entspannungsschrittes (Zeit in s) dargestellt. In der unteren Hälfte sind die zu den jeweiligen Druckkurven 20a, 21a, 22a, 23a korrespondierenden Sensorsignale 20b, 21b, 22b, 23b dargestellt (der Wert "0" indiziert den geschlossenen (Soll-)Zustand und der Wert "1" den geöffneten (Soll-) Zustand der jeweiligen Klemmeinrichtung 20, 21, 22, 23).

Wenn der Klemmdruck unter einen vorbestimmten Wert abgesenkt wird (im dargestellten Beispiel 5000 hPa), kann die jeweilige Klemmeinrichtung als geöffnet bzw. gelöst gelten. Zum Lösen von Verspannungen in einem eingespannten plattenförmigen Werkstück ist es also nicht notwendigerweise erforderlich, dass alle Klemmeinrichtungen 20, 21, 22, 23 vollständig (d.h. Klemmdruck = 0) gelöst werden (im Beispiel wird der Klemmdruck der innen liegenden Klemmeinrichtungen 21 und 22 jeweils nicht bis auf 0 reduziert).

Die zweite Phase des Entspannungsschrittes kann eingeleitet werden, sobald der Klemmdruck der Klemmeinrichtungen 22, 23 aus der ersten Phase oberhalb eines Mindestklemmdruckes (z.B. 5000 hPa) liegt. Da das plattenförmige Werkstück 12 während des Entspannungsschrittes nicht bewegt wird, genügt für die sichere Fixierung des Werkstücks 12 bereits ein niedrigerer Klemmdruck als im Schneidbetrieb.

Der Entspannungsschritt ist abgeschlossen, wenn der Klemmdruck jeder der Klemmeinrichtungen 20, 21, 22, 23 wieder den für den Betrieb notwendigen Sollwert (im Beispiel 9300 hPa) erreicht hat.

## Patentansprüche

1. Verfahren zur Herstellung von Werkstückteilen (14) aus einem plattenförmigen Werkstück (12) in einer Bearbeitungsmaschine (11), insbesondere Laserbearbeitungsmaschine,
- bei dem das plattenförmige Werkstück (12) auf eine Werkstückauflage (14) positioniert und durch Klemmeinrichtungen (20, 21, 22, 23) zur Werkstückauflage (14) gehalten wird,
- bei dem mit einem Prozessstrahl (13) mehrere Werkstückteile (14) aus dem plattenförmigen Werkstück (12) geschnitten werden,
- bei dem der Prozessstrahl (13) mit einem Bearbeitungskopf (25) relativ zur Werkstückauflage (14) verfahren wird und/oder das plattenförmige Werkstück (12) durch die Klemmeinrichtungen (20, 21, 22, 23) relativ zur Werkstückauflage (14) bewegt wird,
**dadurch gekennzeichnet,**
- **dass** ein Schneidprozess zum Abarbeiten des plattenförmigen Werkstücks (12) für die Herstellung der Werkstückteile (14) zumindest einmal durch einen Entspannungsschritt für das plattenförmige Werkstück (12) unterbrochen wird, um die durch Wärmeeintrag in das plattenförmige Werkstück (12) erzeugten Verspannungen abzubauen, wobei die Anzahl der Entspannungsschritte während des Schneidprozesses zur Abarbeitung des plattenförmigen Werkstücks (12) in Abhängigkeit von der Zahl der aus dem plattenförmigen Werkstück (12) herzustellenden Werkstückteile (14), der Materialstärke des plattenförmigen Werkstücks (12), der Größe der Werkstückteile (14) und/oder der Leistung des Prozessstrahles (13) angesteuert wird, und
- **dass** bei dem Entspannungsschritt zumindest eine Klemmeinrichtung (20, 21, 22, 23) zum Entspannen des plattenförmigen Werkstücks (12) gelöst wird und nach dem Entspannen des plattenförmigen Werkstücks (12) und vor der Fortführung des Schneidprozesses die zumindest eine Klemmeinrichtung (20, 21, 22, 23) geschlossen wird, wobei die Zeit zum Lösen und nachfolgenden vollständigen Schließen zumindest einer Klemmeinrichtung (20, 21, 22, 23) weniger als 5 Sekunden, vorzugsweise weniger als 3 Sekunden beträgt, und
- **dass** bei dem Entspannungsschritt entweder das plattenförmige Werkstück (12) entlang einer Seitenkante (24) durch drei Klemmeinrichtungen (20, 21, 22) gehalten wird und zum Entspannen des plattenförmigen Werkstücks (12) zunächst die eine äußere Klemmeinrichtung (20; 22) geöffnet und geschlossen wird und darauffolgend die gegenüberliegende äußere Klemmeinrichtung (22; 20) geöffnet und geschlossen wird
oder
das plattenförmige Werkstück (12) entlang der Seitenkante (24) durch vier oder mehrere Klemmeinrichtungen (20, 21,22, 23) gehalten wird und zum Entspannen des plattenförmigen Werkstücks (12) zunächst eine äußere Klemmeinrichtung (23) in einer Hälfte des Werkstücks (12) und darauffolgend zumindest eine benachbart dazu innenliegende Klemmeinrichtung (22) geöffnet wird, wobei die beiden weiteren Klemmeinrichtungen (20, 21) oder die Klemmeinrichtungen von der anderen Hälfte des plattenförmigen Werkstückes, die den geöffneten Klemmeinrichtungen (22, 23) gegenüber liegen, geschlossen bleiben, und darauffolgend zunächst die innenliegende Klemmeinrichtung (22) und anschließend die weiter außen liegende Klemmeinrichtung (23) geschlossen werden und dieser Vorgang auf der gegenüberliegenden Seite des plattenförmigen Werkstücks (12) wiederholt wird.

2. Verfahren nach Anspruch 1, **dadurch gekennzeichnet, dass** der Schneidprozess nach einem Schneidschritt zum vollständigen Schneiden eines Werkstückteils (14) und vor dem Beginn des nächsten Schneidschrittes zum Schneiden eines nachfolgenden Werkstückteils (14) für den Entspannungsschritt unterbrochen wird.

3. Verfahren nach einem der vorhergehenden Ansprüche, **dadurch gekennzeichnet, dass** die Anzahl der Entspannungsschritte bei einer Materialstärke des plattenförmigen Werkstücks (12) von 4 mm oder weniger größer als bei einer Materialstärke des plattenförmigen Werkstücks (12) von 4 mm oder mehr ist.

4. Verfahren nach einem der vorhergehenden Ansprüche, **dadurch gekennzeichnet, dass** vor und/oder nach dem Schneidvorgang eines Werkstückteils (14), das eine Kantenlänge von größer als 500 mm aufweist und/oder eine längliche Form aufweist, bei der das Verhältnis der Kantenlängen des umschließenden Rechtecks zueinander größer als 2:1 ist, ein Entspannungsschritt durchgeführt wird.

5. Verfahren nach einem der vorhergehenden Ansprüche, **dadurch gekennzeichnet, dass** die herzustellenden Werkstückteile (14) aus dem plattenförmigen Werkstück (12) in Reihen (41) und Spalten (42) geschachtelt werden und dass beim Schneidprozess von Werkstückteilen (14), die eine benachbarte Reihe zu den Klemmeinrichtungen (20, 21, 22, 23) bilden, zumindest ein Entspannungsschritt nach dem Fertigschneiden von wenigstens zwei Werkstückteilen (14) angesteuert wird.

6. Verfahren nach einem der vorhergehenden Ansprüche, **dadurch gekennzeichnet, dass** das plattenförmige Werkstück (12) entlang der Seitenkante (24) von Klemmeinrichtungen (20, 21, 22, 23) gehalten wird und dass der Schneidprozess von Werkstückteilen (14), die in einer von den Klemmeinrichtungen (20, 21, 22, 23) abgewandten Hälfte, insbesondere einem von den Klemmeinrichtungen (20, 21, 22, 23) abgewandten Drittel des plattenförmigen Werkstücks (12) liegen, frei von einem Entspannungsschritt durchgeführt wird.

7. Datenverarbeitungsprogramm für eine Maschinensteuerung einer Bearbeitungsmaschine, insbesondere Laserschneidmaschine, mit einer Werkstückauflage (14), mit Klemmeinrichtungen (20, 21, 22, 23) zum Greifen eines auf der Werkstückauflage (14) positionierten plattenförmigen Werkstücks (12) und mit einer Strahlquelle (36) zur Erzeugung eines Prozessstrahles (13), der über einen Bearbeitungskopf (25) auf das plattenförmige Werkstück (12) gerichtet wird, **dadurch gekennzeichnet, dass** der Programm Befehle umfasst, die bei der Ausführung des Programms durch einen Computer diesen veranlassen, das Verfahren nach einem der Ansprüche 1 bis 6 auszuführen.

8. Bearbeitungsmaschine zur Herstellung von Werkstückteilen (14) aus einem plattenförmigen Werkstück (12) mit einer Werkstückauflage (14), mit Klemmeinrichtungen (20, 21, 22, 23) zum Greifen eines auf der Werkstückauflage (14) positionierten plattenförmigen Werkstücks (12) und mit einer Strahlquelle (36) zur Erzeugung eines Prozessstrahls (13), der über einen Bearbeitungskopf (25) auf das plattenförmige Werkstück (12) gerichtet wird, **dadurch gekennzeichnet, dass**
die Bearbeitungsmaschine eine Maschinensteuerung mit einem Datenverarbeitungsprogramm gemäß Anspruch 7 aufweist, so dass Werkstückteile (14) aus dem plattenförmigen Werkstück (12) gemäß einem Verfahren nach einem der Ansprüche 1 bis 6 hergestellt werden.

## Claims

1. A method for producing workpiece parts (14) from a plate-shaped workpiece (12) in a processing machine (11), in particular a laser processing machine,
- in which the plate-shaped workpiece (12) is positioned on a workpiece support (14) and is held relative to the workpiece support (14) using clamping devices (20, 21, 22, 23),
- in which a process beam (13) is used to cut a plurality of workpiece parts (14) out of the plate-shaped workpiece (12),
- in which the process beam (13) is displaced relative to the workpiece support (14) using a processing head (25) and/or the plate-shaped workpiece (12) is moved relative to the workpiece support (14) using the clamping devices (20, 21, 22, 23),
**characterized in that**,
- a cutting process for processing the plate-shaped workpiece (12) to produce the workpiece parts (14) is interrupted at least once by a relaxation step for the plate-shaped workpiece (12) in order to reduce the stresses produced in the plate-shaped workpiece (12) due to the heat input, wherein the number of relaxation steps during the cutting process for processing the plate-shaped workpiece (12) is determined on the basis of the number of workpiece parts (14) to be produced from the plate-shaped workpiece (12), the material thickness of the plate-shaped workpiece (12), the size of the workpiece parts (14) and/or the power of the process beam (13), and
- **in that** during the relaxation step, at least one clamping device (20, 21, 22, 23) is released in order to relax the plate-shaped workpiece (12) and, following the relaxation of the plate-shaped workpiece (12) and before continuing the cutting process, the at least one clamping device (20, 21, 22, 23) is closed, wherein the time to release and then fully close at least one clamping device (20, 21, 22, 23) is less than 5 seconds, preferably less than 3 seconds, and
- **in that** during the relaxation step
either the plate-shaped workpiece (12) is held along a side edge (24) by three clamping devices (20, 21, 22) and to relax the plate-shaped workpiece (12) one outer clamping device (20; 22) is first opened and closed and then the opposite outer clamping device (20; 22) is opened and closed
or
the plate-shaped workpiece (12) is held by four or more clamping devices (20, 21, 22, 23) along a side edge (24) and, to relax the plate-shaped workpiece (12), one outer clamping device (23) in one half of the workpiece (12) is opened first, followed by at least one inner clamping device (22) adjacent thereto, wherein the two other clamping devices (20, 21), or the clamping devices from the other half of the plate-shaped workpiece which are located opposite to the opened clamping devices (22, 23), remain closed, and thereafter first the inner clamping device (22) and then the other outer clamping device (23) are closed, and this process is repeated on the opposite side of the plate-shaped workpiece (12).

2. The method according to claim 1, **characterized in that** after a cutting step for completely cutting a workpiece part (14), and before beginning the next cutting step for cutting a next workpiece part (14), the cutting process is interrupted for the relaxation step.

3. The method according to one of the preceding claims, **characterized in that**, for a material thickness of the plate-shaped workpiece (12) of 4 mm or less, the number of relaxation steps is greater than for a material thickness of the plate-shaped workpiece (12) of 4 mm or more.

4. The method according to one of the preceding claims, **characterized in that** a relaxation step is carried out before and/or after the cutting process of a workpiece part (14) having an edge length of greater than 500 mm and/or having an elongated shape in which the ratio of the edge lengths of the rectangular perimeter to each other is greater than 2:1.

5. The method according to one of the preceding claims, **characterized in that** the workpiece parts (14) to be produced from the plate-shaped workpiece (12) are nested in rows (41) and columns (42), and that at least one relaxation step is initiated following a final cutting of at least two workpiece parts (14) during the cutting process of workpiece parts (14) that form a row adjacent to the clamping devices (20, 21, 22, 23).

6. The method according to one of the preceding claims, **characterized in that** the plate-shaped workpiece (12) is held along the side edge (24) by clamping devices (20, 21, 22, 23) and that the cutting process of workpiece parts (14) lying in a half of the plate-shaped workpiece (12) remote from the clamping devices (20, 21, 22, 23), in particular those lying in a third of the plate-shaped workpiece remote from the clamping devices (20, 21, 22, 23), is carried out without a relaxation step.

7. A data processing program for a machine controller of a processing machine, in particular a laser cutting machine, having a workpiece support (14), clamping devices (20, 21, 22, 23) for gripping a plate-shaped workpiece (12) positioned on the workpiece support (14), and a beam source (36) for generating a process beam (13) directed onto the plate-shaped workpiece (12) by a processing head (25), **characterized in that** the program comprises commands which, when the program is executed by a computer, instruct the program to execute the method according to one of claims 1 to 6.

8. A processing machine for producing workpiece parts (14) from a plate-shaped workpiece (12), the machine comprising a workpiece support (14), clamping devices (20, 21, 22, 23) for gripping a plate-shaped workpiece (12) positioned on the workpiece support (14), and a beam source (36) for generating a process beam (13) directed onto the plate-shaped workpiece (12) by a processing head (25), **characterized in that** the processing machine has a machine controller that has a data processing program according to claim 7 such that the workpiece parts (14) are produced from the plate-shaped workpiece (12) according to a method according to one of claims 1 to 6.

## Revendications

1. Procédé de fabrication d'éléments de pièce (14) à partir d'une pièce (12) en forme de plaque dans une machine de traitement (11), en particulier une machine de traitement laser,
- dans lequel la pièce (12) en forme de plaque est positionnée sur un support de pièce (14) et maintenue sur le support de pièce (14) par des dispositifs de serrage (20, 21, 22, 23),
- dans lequel plusieurs éléments de pièce (14) sont découpés dans la pièce (12) en forme de plaque à l'aide d'un faisceau de traitement (13),
- dans lequel le faisceau de traitement (13) est déplacé par rapport au support de pièce (14) à l'aide d'une tête de traitement (25) et/ou la pièce (12) en forme de plaque est déplacée par rapport au support de pièce (14) par les dispositifs de serrage (20, 21, 22, 23),
**caractérisé**
- **en ce qu'**un processus de coupe d'usinage de la pièce (12) en forme de plaque pour la fabrication des éléments de pièce (14) est interrompu au moins une fois par une étape de détente de la pièce (12) en forme de plaque afin de réduire les tensions générées par l'apport de chaleur dans la pièce (12) en forme de plaque, dans lequel le nombre d'étapes de détente pendant le processus de coupe d'usinage de la pièce (12) en forme de plaque est commandé en fonction du nombre d'éléments de pièce (14) à fabriquer à partir de la pièce (12) en forme de plaque, de l'épaisseur du matériau de la pièce (12) en forme de plaque, de la taille des éléments de pièce (14), et/ou de la puissance du faisceau de traitement (13), et
- **en ce que**, lors de l'étape de détente, au moins un dispositif de serrage (20, 21, 22, 23) est desserré pour détendre la pièce (12) en forme de plaque, et après avoir détendu la pièce (12) en forme de plaque et avant de poursuivre le processus de coupe, lesdits au moins un dispositifs de serrage (20, 21, 22, 23) sont fermés, dans lequel le temps nécessaire pour desserrer puis fermer complètement au moins un dispositif de serrage (20, 21, 22, 23) est inférieur à 5 secondes, et de préférence inférieur à 3 secondes, et
- **en ce que**, pendant l'étape de détente,
soit la pièce (12) en forme de plaque est maintenue le long d'un bord latéral (24) par trois dispositifs de serrage (20, 21, 22) et, pour détendre la pièce (12) en forme de plaque, d'abord un dispositif de serrage externe (20 ; 22) est ouvert et fermé, puis le dispositif de serrage externe opposé (22 ; 20) est ouvert et fermé,
soit
la pièce (12) en forme de plaque est maintenue le long du bord latéral (24) par quatre dispositifs de serrage (20, 21, 22, 23) ou plus et, pour détendre la pièce (12) en forme de plaque, d'abord un dispositif de serrage externe (23) est ouvert dans une moitié de la pièce (12), puis au moins un dispositif de serrage interne (22) adjacent au précédent est ouvert, dans lequel les deux autres dispositifs de serrage (20, 21) ou les dispositifs de serrage de l'autre moitié de la pièce en forme de plaque situés en face des dispositifs de serrage ouverts (22, 23) reste fermés, et ensuite d'abord le dispositif de serrage interne (22) puis l'autre dispositif de serrage externe (23) sont fermés, et ce processus est répété sur le côté opposé de la pièce (12) en forme de plaque.

2. Procédé selon la revendication 1, **caractérisé en ce que** le processus de coupe est interrompu pour l'étape de détente après une étape de coupe pour couper complètement un élément de pièce (14), et avant le début de l'étape de coupe suivante pour couper un élément de pièce (14) suivant.

3. Procédé selon l'une des revendications précédentes, **caractérisé en ce que** le nombre d'étapes de détente est plus grand quand l'épaisseur de matériau de la pièce (12) en forme de plaque est inférieure ou égale à 4 mm que lorsque l'épaisseur de matériau de la pièce (12) en forme de plaque est supérieur ou égal à 4 mm.

4. Procédé selon l'une des revendications précédentes, **caractérisé en ce qu'**une étape de détente est effectuée avant et/ou après le processus de découpe d'un élément de pièce (14) qui présente une longueur de côté supérieure à 500 mm et/ou une forme allongée, dans lequel le rapport des longueurs de côté du rectangle englobant est supérieur à 2:1.

5. Procédé selon l'une des revendications précédentes, **caractérisé en ce que** les éléments de pièce (14) à fabriquer à partir de la pièce (12) en forme de plaque sont emboîtés en lignes (41) et en colonnes (42), et **en ce que** pendant le processus de découpe des éléments de pièce (14) qui forment une ligne adjacente pour les dispositifs de serrage (20, 21, 22, 23), au moins une étape de détente est commandée après la coupe finale d'au moins deux éléments de pièce (14).

6. Procédé selon l'une des revendications précédentes, **caractérisé en ce que** la pièce (12) en forme de plaque est maintenue le long du bord latéral (24) par des dispositifs de serrage (20, 21, 22, 23), et **en ce que** le processus de découpe d'éléments de pièce (14) qui se trouvent dans une moitié de la pièce (12) en forme de plaque opposée aux dispositifs de serrage (20, 21, 22, 23), en particulier dans un tiers de la pièce (12) en forme de plaque opposé aux dispositifs de serrage (20, 21, 22, 23), s'effectue sans étape de détente.

7. Programme de traitement de données pour la commande d'une machine de traitement, en particulier d'une machine de découpe laser, comportant un support de pièce (14) et des dispositifs de serrage (20, 21, 22, 23) pour saisir une pièce (12) en forme de plaque positionnée sur le support de pièce (14), et une source de faisceau (36) pour générer un faisceau de traitement (13), qui est dirigé sur la pièce (12) en forme de plaque via une tête de traitement (25), **caractérisé en ce que** le programme comprend des commandes qui, lors de l'exécution du programme par un ordinateur, commandent à celui-ci d'exécuter le procédé selon l'une des revendications 1 à 6.

8. Machine de traitement pour produire des éléments de pièce (14) à partir d'une pièce (12) en forme de plaque comportant un support de pièce (14), avec des dispositifs de serrage (20, 21, 22, 23) pour saisir une pièce (12) en forme de plaque positionnée sur le support de pièce (14) et avec une source de faisceau (36) pour générer un faisceau de traitement (13), qui est dirigé sur la pièce (12) en forme de plaque via une tête de traitement (25), **caractérisée en ce que** la machine de traitement comporte une commande de machine avec un programme de traitement de données selon la revendication 7, de telle sorte que des éléments de pièce (14) peuvent être fabriqués à partir de la pièce (12) en forme de plaque conformément à un procédé selon l'une des revendications 1 à 6.
